# EUROPEAN PATENT APPLICATION

(11) **EP 3 499 350 A1**
(43) Date of publication of application: **19.06.2019**
(21) Application number: 16913795.7
(22) Date of filing: 24.08.2016
(51) Int. Cl.: G06F 3/048

(54) **DISPLAY INTERFACE CONTROL METHOD AND DEVICE**

(71) Applicant: Beijing Xiaomi Mobile Software Co., Ltd., Beijing 100085 (CN)
(72) Inventor: LI, Honghui, Beijing 100085 (CN); ZHOU, Lei, Beijing 100085 (CN); ZHANG, Shuxiao, Beijing 100085 (CN)
(74) Representative: dompatent von Kreisler Selting Werner - Partnerschaft von Patent- und Rechtsanwälten mbB
(86) International application number: PCT/CN2016/096603
(87) International publication number: WO 2018/035772

(57) **Abstract**

A display interface control method and device, used to improve control of a display interface and reduce accident operation during a voice call. The method comprises: performing detection on whether a voice call state is on (101); if the voice call state in on, then performing detection on whether a predetermined first trigger event occurs (102); and if the predetermined first trigger event occurs, then displaying an interface for preventing an accidental touch (103).

## Description

### TECHNICAL FIELD

The present disclosure relates to the technical field of communication and computer processing, and more particularly to a method and a device for controlling a display interface.

### BACKGROUND

With the development of electronic technology, mobile phones have developed into the era of full touch screens. The touch screen can realize all operations of the user on the mobile phone. Additionally, the operation gesture is no longer limited to clicking on a button, and can have operations such as clicking, double-clicking, long-pressing, and various sliding, which makes the operation of the mobile phone more flexible and convenient.

### SUMMARY

In order to overcome the problem existing in the related art, the present disclosure provides a method and a device for controlling a display interface.

According to a first aspect of the embodiments of the present disclosure, there is provided a method for controlling a display interface. The method includes:
monitoring whether a current state is a voice call state;
when the current state is the voice call state, monitoring whether a preset first trigger event occurs; and
when the preset first trigger event occurs, displaying an anti-unintended-touch interface.

The technical solution provided by the embodiment of the present disclosure may include the following beneficial effects: in this embodiment, an anti-unintended-touch interface can be displayed during the voice call, which can reduce the user's accidental mis-operations during the call and reduce the redundant processing of the device.

In one embodiment, monitoring whether a current state is a voice call state includes:
monitoring whether an application service of a voice call type is in a voice activated state.

The technical solution provided by the embodiment of the present disclosure may include the following beneficial effects: this embodiment provides an implementation for monitoring whether a current state is a voice call state, and by monitoring the application service, it is possible to monitor whether the current state is the voice call state in a more comprehensive and accurate manner.

In one embodiment, monitoring whether a preset first trigger event occurs includes at least one of:
monitoring whether an earpiece device is enabled;
monitoring whether a wakeup lock event for a sensor related to a screen occurs;
monitoring whether a device movement trajectory related to a voice call occurs; and
monitoring whether a screen-state change event occurs.

The technical solution provided by the embodiment of the present disclosure may include the following beneficial effects: the present embodiment can determine whether to display an anti-unintended-touch interface through various monitoring, so that the monitoring is more accurate and the user's unintended operations can be further reduced.

In one embodiment, monitoring whether an earpiece device is enabled includes:
monitoring through an audio management service whether the earpiece device is enabled.

The technical solution provided by the embodiment of the present disclosure may include the following beneficial effects: the present embodiment monitors through the audio management service whether the earpiece device is enabled, and can monitor whether the earpiece device is enabled more accurately and timely, which facilitates determining whether to display the anti-unintended-touch interface more accurately.

In one embodiment, monitoring through an audio management service whether the earpiece device is enabled includes:
monitoring through the audio management service whether an update event at an audio port occurs;
when an update event at the audio port is monitored, identifying a primary output device;
obtaining a list of audio output ports, based on an identifier of the primary output device; and
monitoring whether the earpiece device is enabled, based on a device type in the list of audio output ports.

The technical solution provided by the embodiment of the present disclosure may include the following beneficial effects: this embodiment provides an implementation for monitoring whether the earpiece device is enabled.

In one embodiment, monitoring whether a wakeup lock event for a sensor related to a screen occurs includes:
monitoring whether the wakeup lock event for the sensor related to the screen occurs, through a power management service.

The technical solution provided by the embodiment of the present disclosure may include the following beneficial effects: by monitoring through the power management service whether a wakeup lock event for the sensor related to the screen occurs, the wakeup lock event for the sensor related to the screen can be monitored more accurately and timely, which facilitates determining more accurately whether to display the anti-unintended-touch interface.

In one embodiment, monitoring whether the wakeup lock event for the sensor related to the screen occurs, through a power management service includes:
monitoring, in an interface monitoring mode, whether the wakeup lock event for the sensor related to the screen occurs, through a power management service.

The technical solution provided by the embodiment of the present disclosure may include the following beneficial effects: in this embodiment, by monitoring in the interface monitoring mode, the wakeup lock event can be monitored more timely and accurately.

In one embodiment, the wakeup lock event includes requesting a wakeup lock event or releasing a wakeup lock event.

The technical solution provided by the embodiment of the present disclosure may include the following beneficial effects: in this embodiment, multiple wakeup lock events are monitored, and each of the wakeup lock events will display an anti-unintended-touch interface, which facilitates determining whether to display an anti-unintended-touch interface in a more accurate and timely manner.

In one embodiment, monitoring whether a device movement trajectory related to a voice call occurs includes:
monitoring whether a device movement trajectory related to a voice call occurs, through a user behavior service or an input management service.

The technical solution provided by the embodiment of the present disclosure may include the following beneficial effects: in this embodiment, by monitoring through the user behavior service or the input management service whether a device movement trajectory related to a voice call occurs, the device movement trajectory related to the voice call can be monitored more accurately and timely, which facilitates determining more accurately whether or not to display an anti-unintended-touch interface.

In one embodiment, the method further includes:
at boot time, starting the audio management service, the power management service, the user behavior service or the input management service.

The technical solution provided by the embodiment of the present disclosure may include the following beneficial effects: in this embodiment, monitoring is started at boot time to determine whether to display an anti-unintended-touch interface, which is more accurate and timely.

In one embodiment, when the preset first trigger event occurs, displaying an anti-unintended-touch interface includes:
when the preset first trigger event occurs, starting time counting; and
when the time counting reaches a preset time duration, displaying the anti-unintended-touch interface.

The technical solution provided by the embodiment of the present disclosure may include the following beneficial effects: in this embodiment, a buffer time is provided for the user, and then the anti-unintended-touch interface is displayed to reduce interference to the user.

In one embodiment, the method further includes:
upon the anti-unintended-touch interface is displayed, starting time counting; and
when the time counting reaches a first monitoring duration, entering a screen off state.

The technical solution provided by the embodiment of the present disclosure may include the following beneficial effects: in this embodiment, after the anti-unintended-touch interface is displayed, the screen can be turned off to save power.

In one embodiment, the method further includes:
monitoring whether a preset second trigger event occurs; and
when the preset second trigger event occurs, removing the anti-unintended-touch interface.

The technical solution provided by the embodiment of the present disclosure may include the following beneficial effects: in this embodiment, the anti-unintended-touch interface can also be removed to facilitate the user to use other functions of the device.

In one embodiment, monitoring whether a preset second trigger event occurs includes at least one of:
monitoring whether the earpiece device is deactivated;
monitoring whether a screen off state event occurs;
monitoring whether the anti-unintended-touch interface has been displayed for a preset anti-unintended-touch duration; and
monitoring whether a trigger event for the anti-unintended-touch interface occurs.

The technical solution provided by the embodiment of the present disclosure may include the following beneficial effects: this embodiment provides various monitoring means to remove the anti-unintended-touch interface more accurately and timely, and is convenient for the user to use other functions of the device.

In one embodiment, the method further includes:
upon the anti-unintended-touch interface is removed, starting time counting; and
when the time counting reaches a second monitoring duration, displaying the anti-unintended-touch interface again.

The technical solution provided by the embodiment of the present disclosure may include the following beneficial effects: in this embodiment, the anti-unintended-touch interface can be repeatedly displayed, which facilitates further reducing the user's unintended touches on the screen.

In one embodiment, the method further includes:
when the time counting does not reach the preset time duration or does not reach the second monitoring duration, monitoring whether a user operation occurs; and
when the user operation occurs, restarting time counting.

The technical solution provided by the embodiment of the present disclosure may include the following beneficial effects: this embodiment can restart time counting after the user's operation, so that it is possible to display an anti-unintended-touch interface after the user's operation, which facilitates reducing the user's unintended touches on the screen. Restarting time counting can also give the user a reasonable operation time and reduce the display of the anti-unintended-touch interface to affect the normal operation of the user.

In one embodiment, the anti-unintended-touch interface includes: a sliding-unlocking anti-unintended-touch interface, or a touch-unlocking anti-unintended-touch interface.

The technical solution provided by the embodiment of the present disclosure may include the following beneficial effects: this embodiment provides various anti-unintended-touch interfaces to suit various application scenarios.

According to a second aspect of the embodiments of the present disclosure, there is provided a device for controlling a display interface. The device includes:
a voice monitoring module configured to monitor whether a current state is a voice call state;
a first trigger monitoring module configured to, when the current state is the voice call state, monitor whether a preset first trigger event occurs; and
a displaying module configured to, when the preset first trigger event occurs, display an anti-unintended-touch interface.

In one embodiment, the voice monitoring module includes:
a voice monitoring sub-module configured to monitor whether an application service of a voice call type is in a voice activated state.

In one embodiment, the first trigger monitoring module includes at least one of:
an earpiece monitoring sub-module configured to monitor whether an earpiece device is enabled;
a wakeup lock monitoring sub-module configured to monitor whether a wakeup lock event for a sensor related to a screen occurs;
a trajectory monitoring sub-module configured to monitor whether a device movement trajectory related to a voice call occurs; and
a screen monitoring sub-module configured to monitor whether a screen-state change event occurs.

In one embodiment, the earpiece monitoring sub-module is configured to monitor through an audio management service whether the earpiece device is enabled.

In one embodiment, the earpiece monitoring sub-module is configured to monitor through the audio management service whether an update event at an audio port occurs; when an update event at the audio port is monitored, identify a primary output device; obtain a list of audio output ports, based on an identifier of the primary output device; and monitor whether the earpiece device is enabled, based on a device type in the list of audio output ports.

In one embodiment, the wakeup lock monitoring sub-module is configured to monitor whether the wakeup lock event for the sensor related to the screen occurs, through a power management service.

In one embodiment, the wakeup lock monitoring sub-module is configured to monitor, in an interface monitoring mode, whether the wakeup lock event for the sensor related to the screen occurs, through a power management service.

In one embodiment, the wakeup lock event includes requesting a wakeup lock event or releasing a wakeup lock event.

In one embodiment, the trajectory monitoring sub-module is configured to monitor whether a device movement trajectory related to a voice call occurs, through a user behavior service or an input management service.

In one embodiment, the device further includes:
a boot starting module configured to, at boot time, start the audio management service, the power management service, the user behavior service or the input management service.

In one embodiment, the displaying module includes:
a time counting sub-module configured to, when the preset first trigger event occurs, start time counting; and
a displaying sub-module configured to, when the time counting reaches a preset time duration, display the anti-unintended-touch interface.

In one embodiment, the device further includes:
a first time counting module configured to, upon the anti-unintended-touch interface is displayed, start time counting; and
a screen off module configured to, when the time counting reaches a first monitoring duration, enter a screen off state.

In one embodiment, the device further includes:
a second trigger monitoring module configured to monitor whether a preset second trigger event occurs; and
a removing module configured to, when the preset second trigger event occurs, remove the anti-unintended-touch interface.

In one embodiment, the second trigger monitoring module includes at least one of:
an earpiece deactivating sub-module configured to monitor whether the earpiece device is deactivated;
a screen off sub-module configured to monitor whether a screen off state event occurs;
a duration monitoring sub-module configured to monitor whether the anti-unintended-touch interface has been displayed for a preset anti-unintended-touch duration; and
a triggering sub-module configured to monitor whether a trigger event for the anti-unintended-touch interface occurs.

In one embodiment, the device further includes:
a second time counting module configured to, upon the anti-unintended-touch interface is removed, start time counting ; and
a re-displaying module configured to, when the time counting reaches a second monitoring duration, display the anti-unintended-touch interface again.

In one embodiment, the device further includes:
a user operation monitoring module configured to, when the time counting does not reach the preset time duration or does not reach the second monitoring duration, monitor whether a user operation occurs; and
a restarting time counting module configured to, when the user operation occurs, restart time counting.

In one embodiment, the anti-unintended-touch interface includes: a sliding-unlocking anti-unintended-touch interface, or a touch-unlocking anti-unintended-touch interface.

According to a third aspect of the embodiments of the present disclosure, there is provided a device for controlling a display interface. The device includes:
a processor; and
a memory for storing instructions executable by the processor,
wherein the processor is configured to:
monitor whether a current state is a voice call state;
when the current state is the voice call state, monitor whether a preset first trigger event occurs; and
when the preset first trigger event occurs, display an anti-unintended-touch interface.

It should be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a flowchart showing a method for controlling a display interface according to an exemplary embodiment.
Fig. 2 is a schematic diagram showing an anti-unintended-touch interface according to an exemplary embodiment.
Fig. 3 is a schematic diagram showing an anti-unintended-touch interface according to an exemplary embodiment.
Fig. 4 is a flowchart showing a method for controlling a display interface according to an exemplary embodiment.
Fig. 5 is a flowchart showing a method for controlling a display interface according to an exemplary embodiment.
Fig. 6 is a flowchart showing a method for controlling a display interface according to an exemplary embodiment.
Fig. 7 is a flowchart showing a method for controlling a display interface according to an exemplary embodiment.
Fig. 8 is a block diagram showing a device for controlling a display interface according to an exemplary embodiment.
Fig. 9 is a block diagram showing a voice monitoring module according to an exemplary embodiment.
Fig. 10 is a block diagram showing a first trigger monitoring module according to an exemplary embodiment.
Fig. 11 is a block diagram showing a device for controlling a display interface according to an exemplary embodiment.
Fig. 12A is a block diagram showing a displaying module according to an exemplary embodiment.
Fig. 12B is a block diagram showing a device for controlling a display interface according to an exemplary embodiment.
Fig. 12C is a block diagram showing a device for controlling a display interface according to an exemplary embodiment.
Fig. 13 is a block diagram showing a device for controlling a display interface according to an exemplary embodiment.
Fig. 14A is a block diagram showing a second trigger monitoring module according to an exemplary embodiment.
Fig. 15 is a block diagram showing a device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

In the related art, when the user makes a call with a mobile phone, if the mobile phone is close to the user's face, in order to save power, the mobile phone will turn off the screen. A mobile phone senses whether it is close to an object through a sensor. The sensitivity of the sensor may be defective, causing the mobile phone not to turn off the screen when the mobile phone is close to the user's face. At this time, the user's face may touch the screen, that is, an unintended touch, which may result in an unintended operation. The mobile phone may process redundantly.

In order to solve the above problem, in this embodiment, during the user's call, an anti-unintended-touch interface is displayed, to reduce unintended operations when the mobile phone does not turn off the screen.

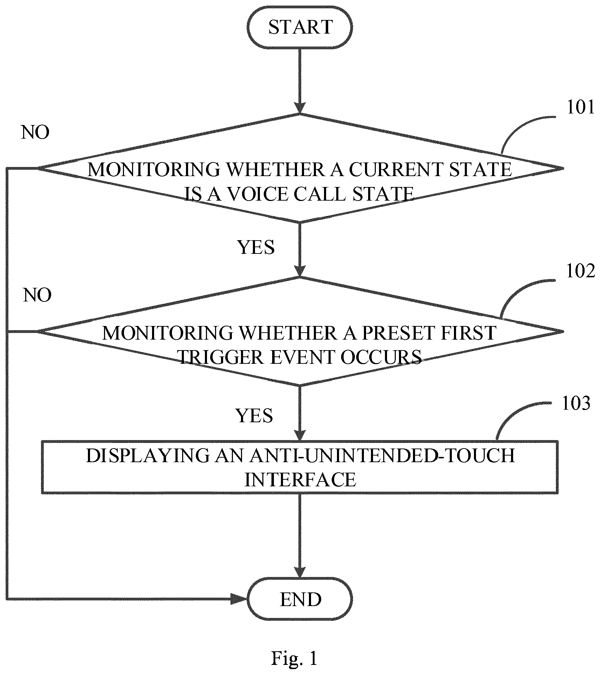

Fig. 1 is a flowchart showing a method for controlling a display interface according to an exemplary embodiment. As shown in Fig. 1, the method may be performed by a mobile terminal, and include the following steps.

In step 101, it is monitored whether a current state is a voice call state.

In step 102, when the current state is the voice call state, it is monitored whether a preset first trigger event occurs.

When the current state is not the voice call state, the process is ended, and the anti-unintended-touch interface may not be displayed.

In step 103, when the preset first trigger event occurs, the anti-unintended-touch interface is displayed.

When the preset first trigger event has not occurred, the step 102 is repeated until the voice call is over. Then the process is ended, and the anti-unintended-touch interface may not be displayed.

In this embodiment, the voice call includes a call by dialing a phone number through a call application, and also includes a voice conversation performed through a social application, as well as a video call and a voice call through a social application, and the like. All voice information exchange requiring an audio output device such as an earpiece, an earphone, a speaker, etc., belongs to the voice call in the present embodiment, and means the voice call state.

For example, in the call application, when the user clicks a call button, the mobile terminal enters the voice call state, regardless of whether the other end of the line has responded to the voice call, since at this time, the prompt tone for the call connection can be heard through the earpiece.

For another example, in the social application, taking a voice call as an example, when the user clicks on a voice call request, the mobile terminal enters the voice call state, regardless of whether the other end has accepted the voice call, since the audio output device such as the earpiece has been activated at this time. The voice call is a long-duration link through which both ends send voice messages to each other, similar to a network call service.

For another example, in the social application, taking a voice conversation as an example, when the user clicks the icon button of a voice message sent by the other end, the mobile terminal enters the voice call state. The voice conversation is a short-duration link, only one voice message is sent from one end to the other end at a time. Once the voice message is sent successfully, the link is interrupted.

After it is determined that the current state is the voice call state, it is monitored whether a preset first trigger event occurs. The first trigger event is related to some events that occur during the voice call. In the scenario where such events occur, the user may easily make an unintended touch on the touch screen. Therefore, when the preset first trigger event occurs, the anti-unintended-touch interface is displayed.

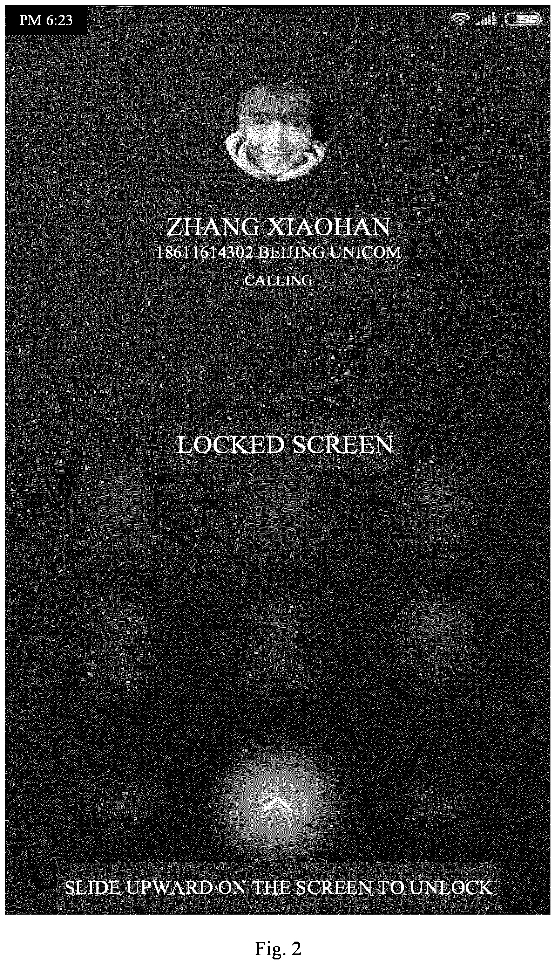

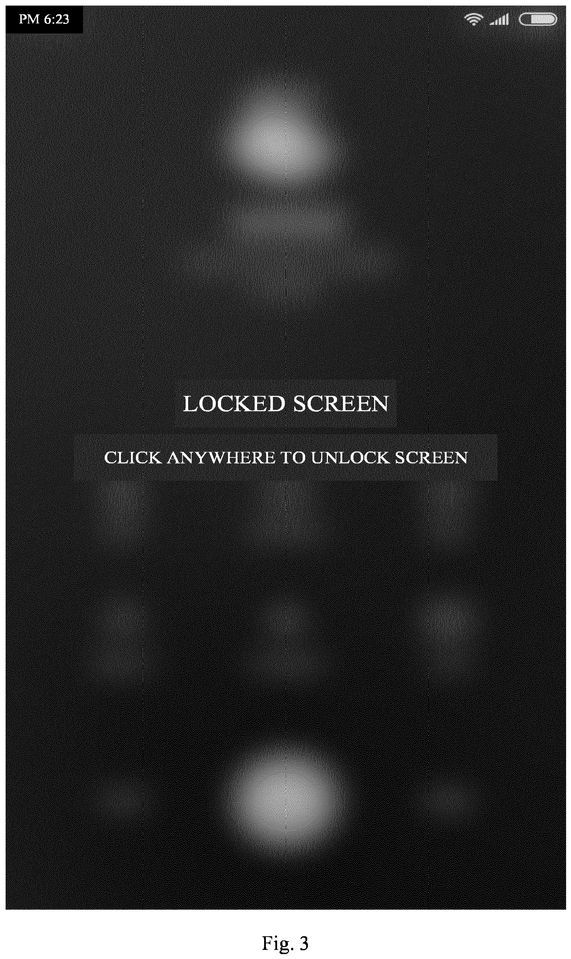

In this embodiment, the anti-unintended-touch interface is a pre-configured interface, and the anti-unintended-touch interface may have a button for removing the anti-unintended-touch interface and present no other buttons. In this way, when the user touches the anti-unintended-touch interface, the user cannot trigger any process except for triggering the process of removing the anti-unintended-touch interface, which can reduce unintended operations and unintended processes. The anti-unintended-touch interface may display the user information of the user that is on the other end of the call. An example of an anti-unintended-touch interface may be shown in Figs. 2 and 3.

In one embodiment, the anti-unintended-touch interface includes: a sliding-unlocking anti-unintended-touch interface, or a touch-unlocking anti-unintended-touch interface. Fig. 2 shows the sliding-unlocking anti-unintended-touch interface, which can be unlocked (i.e. the anti-unintended-touch interface is removed) by clicking the button on the bottom of Fig. 2 and sliding upward. Fig. 3 shows the touch-unlocking anti-unintended-touch interface, which can be unlocked by clicking anywhere in the interface.

In one embodiment, step 101 includes a step A1.

In step A1, it is monitored whether an application service of a voice call type is in a voice activated state.

In this embodiment, a list of applications supporting voice calls may be pre-configured. Applications recorded in the application list all belong to an application of a voice call type and support voice call services. Such applications are: call applications, social applications that support voice calls, and the like. The application may support multiple services, and the voice call service may be one of the services. Therefore, the voice call service of the application may also be recorded in the application list. By listening to the ports of the applications in the application list, it may be checked whether the voice call service is enabled, and it may be determined whether the current state is the voice activated state.

For another example, when the application activates the voice call service, the corresponding service is enabled in the operating system, and by monitoring whether the service is enabled, it may be determined whether the current state is the voice activated state. The services related to the voice call service of each application may be pre-configured, and these services may be recorded in a list of services. Then, the services in the list of services may be listened. Taking the Android operating system as an example, information about currently running voice application components may be acquired through the ActivityManager service. If information about a currently running voice application component may be acquired, it may be determined as being in the voice activated state.

In this embodiment, by monitoring the application service, the voice activation state may be determined more accurately and in a timely manner.

In one embodiment, the preset first trigger event includes at least one of the following events:
enabling the earpiece device;
a wakeup lock event for a sensor related to the screen occurring;
a device movement trajectory related to a voice call occurring;
a screen-state change event occurring.

Therefore, the step 102 includes at least one of the following steps: step B1 - step B4.

In step B1, it is monitored whether the earpiece device is enabled.

The mobile terminal may output voice through an audio output device such as an earpiece, an earphone, and a speaker. When the user listens to the voice through the earpiece, the user may hold the mobile terminal with his hand and put the earpiece close to his face or his ear, so that the face or the ear is easily touched with the screen, resulting in an unintended operation. When listening to voice through the earphone or the speaker, it is not easy to make an unintended touch on the screen. Therefore, in the embodiment, when it is monitored that the earphone device is enabled, the anti-unintended-touch interface is displayed. Thus, the anti-unintended-touch interface can be displayed at an appropriate time, which can reduce the user's unintended touches on the screen and reduce interference to the user.

In step B2, it is monitored whether a wakeup lock event for the sensor related to the screen occurs.

The sensors associated with the screen may include a distance sensor, a light sensor and the like. For example, when the distance sensor detects that a distance from an object is less than a preset distance threshold, the mobile terminal may be triggered to enter a screen off state. When the distance sensor detects that a distance from an object is not less than the preset distance threshold, the mobile terminal may be triggered to enter a screen on state. It is similar for the light sensor. When the light sensor detects that an ambient brightness is less than a preset brightness threshold, the mobile terminal is triggered to enter the screen off state. When the light sensor detects that an ambient brightness is not less than the preset brightness threshold, the mobile terminal is triggered to enter the screen on state.

During the user's voice call, when the distance sensor detects that it is close to an object, or when the light sensor detects that the ambient brightness is low, it means that the object is close to the touch screen, which may easily lead to an unintended touch on the screen, resulting in an intended operation. Therefore, it is also necessary to display the anti-unintended-touch interface at this time.

In theory, the sensor can trigger the mobile terminal to enter the screen off state, but in actual applications, the sensor cannot always effectively trigger the mobile terminal to enter the screen off state. That is, there may be a situation that the screen does not enter the screen off state when the screen should enter the screen off state. Therefore, in this embodiment, it is monitored whether a wakeup lock event for a sensor related to the screen occurs. When a wakeup lock event occurs, an anti-unintended-touch interface is displayed to prevent the mobile terminal from failing to enter the screen off state and leading to an unintended touch on the screen.

In step B3, it is monitored whether a device movement trajectory related to a voice call occurs.

In this embodiment, the behavior of a large number of users during a voice call may be counted in advance, for example, the behavior of the user picking up the mobile terminal to the vicinity of the ear when listening to the voice through the earpiece. The mobile terminal may be provided therein with a sensor such as a gyroscope to record the movement trajectory of the mobile terminal in the process. When the mobile terminal generates the movement trajectory, it may be determined that the user is listening to the voice call with the earpiece, and the anti-unintended-touch interface may be displayed. Therefore, it may be monitored whether a device movement trajectory related to a voice call occurs, to determine whether to display the anti-unintended-touch interface.

In step B4, it is monitored whether a screen-state change event occurs.

In this embodiment, the screen-state change event includes an event of entering a screen on state and an event of entering a screen off state.

For example, it is often the case that an unconscious action of the user may cause the mobile terminal to enter the screen on state, and at this time an unintended touch is prone to occur. Therefore, when entering the screen on state, that is, when the screen-state change event occurs, the anti-unintended-touch interface needs to be displayed, to reduce unintended touches on the screen.

As another example, this may happen that the mobile terminal enters the screen off state, but due to some problems, the screen is actually turned on, and an unintended touch may occur. Therefore, when entering the screen off state, that is, when a screen-state change event occurs, an anti-unintended-touch interface needs to be displayed, to reduce unintended touches on the screen. In this embodiment, it may not be monitored whether the screen is actually turned off, the anti-unintended-touch interface may be displayed once the screen off state is entered.

The operating system broadcasts when a screen-state change event occurs. Taking the Android operating system as an example, a broadcast receiver may be registered. The broadcast receiver may have two, one being ACTION_SCREEN_OFF (screen off) and the other being ACTION_SCREEN_ON (screen on), and the broadcast receiver may receive the corresponding broadcast message.

Only one of the above steps B1 - B4 may be adopted. Alternatively, multiple steps may be used, that is, when a plurality of first trigger events occur and when a plurality of conditions are met, the anti-unintended-touch interface is displayed. It may be determined according to actual needs.

In one embodiment, step B1 includes step B11.

In step B11, it is monitored through an audio management service whether the earpiece device is enabled.

Taking the Android operating system as an example, the audio management service may be AudioManager service, and the AudioManager service may enable the AudioPortUpdateListener listening method, to implement monitoring of the earpiece device.

The Audio Management Service starts at boot time and enables the AudioPortUpdateListener listening method. That is, the audio management service registers the AudioPortUpdateListener listening method with the operating system at boot time, implements the registration process through the registerAudioPortUpdateListener() method, and listens to the audio output state through the AudioPortUpdateListener. It is possible to monitor whether the earpiece device is enabled in a timely and accurate manner. If an exception occurs in the system, unregisterAudioPortUpdateListener() cancels the registration and releases the resources of the AudioPortUpdateListener listening interface.

In one embodiment, step B11 includes steps B111-B114.

In step B111, it is monitored through the audio management service whether an update event at the audio port occurs.

Taking the Android operating system as an example, the onAudioPatchListUpdate() event (the update event at the audio port) is monitored through the AudioPortUpdateListener method of the audio management service. If the update event at the audio port is monitored, it may be determined that the user is performing an ordinary call service or a network call service.

In step B112, when an update event at the audio port is monitored, the primary output device is identified.

The primary output device is identified by traversing an audio connection list. The primary output device is preset by default for the system. If there is a primary output device, there is an audio output. However, it is not possible to determine whether the earpiece is enabled at this time.

Continuing with the previous example, the AudioPatch list (audio connection list) is traversed, and it is determined whether the ID (identification) of AudioPortConfig (audio port configuration) in the Source of AudioPatch is the identifier (PrimaryHandle) of the primary output device. The pseudo code may be as follows.

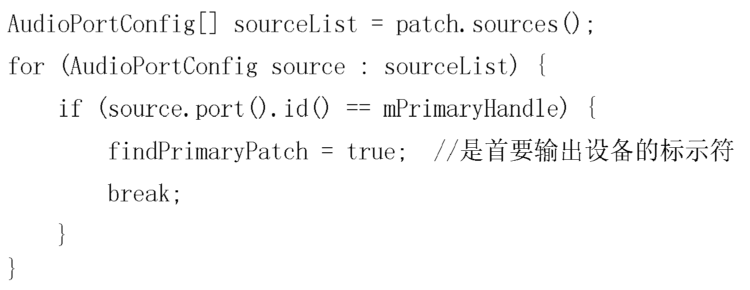

The identifier (PrimaryHandle) of the primary output device is used, so the identifier of the primary output device needs to be obtained in advance. The AudioPort list (audio port list) is traversed with the GetPrimaryHandle() method. When the AudioPort acts as the source and the name is primary, the ID of the AudioPort is determined to be the identifier (PrimaryHandle) of the primary output device. The pseudo code may be as follows.

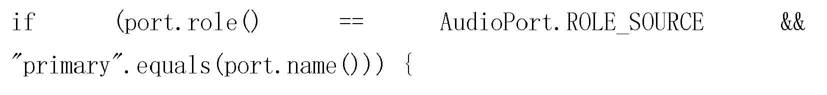

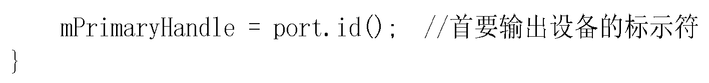

In step B113, a list of audio output ports is obtained based on the identifier of the primary output device.

Continuing with the previous example, AudioPortConfig[] sinkList = patch.sinks(). Where, sinkList is a list of audio output ports. A list of audio ports in the audio connection is obtained previously, including an audio input port and an audio output port, and step B113 is to obtain an audio output port from which the audio is connected.

In step B114, it is monitored whether the earpiece device is enabled based on the device type in the list of audio output ports.

Continuing with the previous example, it is determined whether it is the earpiece by identifying the device type of AudioPortConfig in the Sink (audio output source). The pseudo code may be as follows.

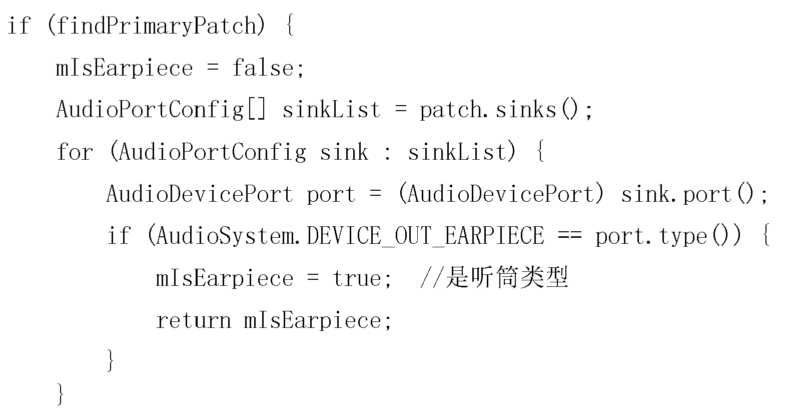

In one embodiment, step B2 includes: step B21.

In step B21, it is monitored through the power management service whether a wakeup lock event for the sensor related to the screen occurs.

Taking the Android operating system as an example, the power management service is PowerManager. The PowerManager service may enable the ProximityObserver listening method to monitor the wakeup lock event. For example, the ProximityObserver listening method is enabled to monitor the IProximityObserver state. In this embodiment, an Observer mode is used. The ProximityObserver listening method is an interface listening method, and is an implementation of the oneway AIDL (interface description file) interface listening. When the wakeup lock event occurs, PowerManager listens in Observer mode via the oneway AIDL (interface description file) interface to monitor whether a wakeup lock event for the sensor related to the screen occurs. The AIDL interface may perform cross-process access, and the communication interface between processes may be defined by AIDL. In this embodiment, the ProximityObserver listening method may monitor whether a wakeup lock event occurs through AIDL. After invoking the AIDL interface, the corresponding function requested by the user may be directly invoked and returned, and does not need to wait for a response in the system service ActivityManager (application management) queue, which is more efficient and more secure to listen. Oneway indicates that the request function is one-way. PowerManager sends a message to the registered client (that is, the client to which the wakeup lock event belongs). It does not need to wait for the client to respond to the PowerManager server. The system is more secure and can reduce unnecessary overhead.

That is, in one embodiment, step B21 includes: step B211.

In step B211, whether the wakeup lock event for the sensor related to the screen occurs is monitored through the power management service in the interface monitoring mode.

Through the interface monitoring mode, the wakeup lock event can be monitored more accurately and timely.

The power management service may be started at boot time and the ProximityObserver listening method is enabled. That is, the power management service registers the ProximityObserver listening method with the operating system at boot time, implements the registration process through the registerProximityObserver () method, and monitors the IProximityObserver state through the ProximityObserver listening method, so that the wakeup lock event for the sensor related to the screen may be monitored more accurately and timely. If an exception occurs in the system, the registration is cancelled through unregisterProximityObserver () method and the resources of the IproximityObserver listener interface are released.

In one embodiment, the wakeup lock event includes requesting a wakeup lock event or releasing a wakeup lock event.

Continuing with the previous example, requesting a wakeup lock event is acquireWakeLockInternal(); and releasing a wakeup lock event is releaseWakeLockInternal().

PowerManager saves the registered interface with an array RemoteCallbackList<IProximityObserver>. The acquireWakeLockInternal() method is executed to check whether the requesting flag is PROXIMITY_SCREEN_OFF_WAKE_LOCK. If it is, the dispatchAcquireWakeLock() method is executed, that is, to invoke acquiring wakeup lock event and determine that the anti-unintended-touch interface needs to be displayed.

The releaseWakeLockInternal() method is executed to check whether the requesting flags is PROXIMITY_SCREEN_OFF_WAKE_LOCK. If it is, the dispatchReleaseWakeLock() method is executed, that is, to release the wakeup lock event and determine that the anti-unintended-touch interface needs to be displayed.

In one embodiment, step B3 includes step B31.

In step B31, it is monitored whether a device movement trajectory related to a voice call occurs through a user behavior service or an input management service.

The user behavior service and the input management service may also be started at boot time. It is possible to monitor in a timely manner whether a device movement trajectory related to a voice call occurs.

In summary, the audio management service, the power management service, the user behavior service, or the input management service is started at boot time.

In one embodiment, step 103 includes step C1 and step C2.

In step C1, time counting is started when the preset first trigger event occurs.

In step C2, when the time counting reaches a preset time duration, the anti-unintended-touch interface is displayed.

In this embodiment, when the preset first trigger event occurs, the anti-unintended-touch interface may not be displayed immediately, and may leave some operation time for the user. For example, if the preset time duration is 3 seconds, within 3 seconds, the user may operate the touch screen (operating the mobile terminal). If the user performs the operation, the anti-unintended-touch interface is not displayed, and the time counting is cancelled. When the time counting reaches the preset time duration, it indicates that the user does not operate the touch screen, and the anti-unintended-touch interface is displayed.

Taking the Android operating system as an example, whether the user behavior occurs during the time counting process or whether the user has command input behavior may be monitored through the PowerManager service, the UserActivity (user behavior) service, or the InputManager service. When the user operation is detected through the userActivityNoUpdateLocked() method, the dispatchUserActivity() method is invoked to perform the processing corresponding to the user behavior. Meanwhile, the time counting is cancelled, and the anti-unintended-touch interface is not displayed.

Alternatively, when the user operation is detected through the userActivityNoUpdateLocked() method, the dispatchUserActivity() method is invoked to perform the processing corresponding to the user behavior, and the time counting is restarted.

That is, in one embodiment, the method further includes: step C3 and step C4.

In step C3, it is monitored whether a user operation occurs when the time counting does not reach the preset time duration.

In step C4, when the user operation occurs, the time is restarted.

When no user operation occurs, the time counting will reach the preset time duration, which is equivalent to continuing to step C2. Therefore, after restarting the time counting, step C2 or step C3 may be continued until the end of the voice call.

Each time the time counting is restarted, the time counting interval may be updated, so as to increase a preset interval for time counting. Thus, it can reduce the interference of the displaying the anti-unintended-touch interface to the user. However, the time counting interval may also be maintained unchanged.

After the anti-unintended-touch interface is displayed, if the user does not perform any operation within a preset monitoring duration, the screen may be turned off. For example, when the sensor triggers to enter the screen off state, the screen off state is delayed by firstly displaying the anti-unintended-touch interface, and then entering the screen off state when the time counting reaches the preset monitoring duration.

That is, in one embodiment, the method further includes step C5 and step C6.

In step C5, after the anti-unintended-touch interface is displayed, the time counting is started.

In step C6, when the time counting reaches the preset first monitoring duration, the screen off state is entered.

At the beginning of the time counting, step C3 and step C4 may be continued. That is, it is monitored whether the user operation occurs after the time counting is started. If no user operation occurs, the time counting reaches a preset first monitoring duration, and step C6 is executed to enter the screen off state. If a user operation occurs, that is, the time counting does not reach the preset first monitoring duration, the time counting is restarted.

In this embodiment, the display of the anti-unintended-touch interface may be a display triggered by entering the screen off state, and the problem targeted by the solution may be that the screen turning off may be actually not desired. If the display of the anti-unintended-touch interface is triggered by entering the screen off state, the screen off state is delayed to be entered in step C6, which can more effectively trigger the mobile terminal to perform the off-screen processing again.

In this embodiment, after the anti-unintended-touch interface is displayed, the anti-unintended-touch interface may also be removed, as discussed below.

In one embodiment, the method further includes step D1 and step D2.

In step D1, it is monitored whether a preset second trigger event occurs.

In step D2, the anti-unintended-touch interface is removed when the preset second trigger event occurs.

Removing the anti-unintended-touch interface at an appropriate timing can reduce interference to the user and reduce resources occupied.

In this embodiment, when the voice call state is exited, the anti-unintended-touch interface may be removed. The anti-unintended-touch interface may also be removed when a second trigger event occurs in a voice call state.

In one embodiment, the second trigger event includes at least one of the following:
deactivating the earpiece device;
a screen off state event occurring;
displaying the anti-unintended-touch interface for a preset anti-unintended-touch duration;
a trigger event for the anti-unintended-touch interface occurring.

Correspondingly, step D1 includes at least one of the following: step D11 - step D14.

In step D11, it is monitored whether the earpiece device is deactivated.

When the user deactivates the earpiece device, the mobile terminal is generally moved away from the ear, so that an unintended touch is not likely to occur, and the anti-unintended-touch interface may be removed at this time. Moreover, when the user moves the mobile terminal away from the ear, the user may want to perform some operations on the mobile terminal, and the anti-unintended-touch interface may be removed to display the original interface (the interface displayed before the anti-unintended-touch interface is displayed), which can be convenient for the user operation.

In step D12, it is monitored whether a screen off state event occurs.

When a screen off event occurs, that is, the mobile terminal enters a screen off state, or the turning off of the screen is actually executed, the anti-unintended-touch interface may be removed to save resources.

In step D13, it is monitored whether the anti-unintended-touch interface has been displayed for a preset anti-unintended-touch duration.

When the anti-unintended-touch interface has been displayed for the preset anti-unintended-touch duration, it may means that the screen off state has been entered. Then, the anti-unintended-touch interface is no longer needed to be displayed, and may be removed. In this embodiment, it may not be cared whether it enters the screen off state, but it is monitored whether the anti-unintended-touch duration (which may be the aforementioned monitoring duration) is reached. The monitored objects are different compared to step D12.

In step D14, it is monitored whether a trigger event for the anti-unintended-touch interface occurs.

In one embodiment, the method further includes step D3 and step D4.

In step D3, after the anti-unintended-touch interface is removed, time counting is started.

In step D4, when the time counting reaches a preset second monitoring duration, the anti-unintended-touch interface is displayed again.

In this embodiment, the anti-unintended-touch interface may be directly displayed when the preset second monitoring duration is reached, or the first trigger event may be monitored again when the preset second monitoring duration is reached. Both methods can display the anti-unintended-touch interface in a timely manner and reduce the user's unintended touches on the screen.

In this embodiment, step C3 and step C4 may also be combined. Then, it is monitored whether a user operation occurs when the time counting does not reach the preset second monitoring duration. When a user operation occurs, the time counting is restarted. Therefore, after the time counting is restarted, step D4 or step C3 may be continued until the end of the voice call.

Each time the time counting is restarted, the time counting interval may be updated, so as to increase a preset interval for time counting. Thus, it can reduce the interference of the displaying the anti-unintended-touch interface to the user. However, the time counting interval may also be maintained unchanged.

As shown in Figs. 2 and 3, the user may slide or click on the anti-unintended-touch interface to trigger the removal of the anti-unintended-touch interface. Figs. 2 and 3 use a fuzzy display effect, which may be a Gaussian blur, implemented by a translucent technique. The fuzzy display effect may prompt the user that this is an anti-unintended-touch interface.

The implementation process of controlling a display interface is described in detail below through several embodiments.

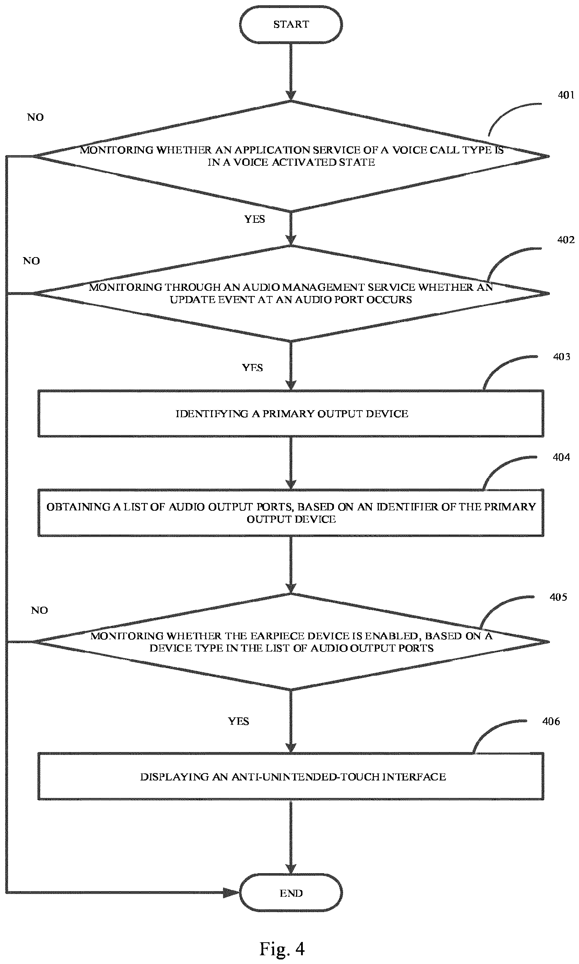

Fig. 4 is a flowchart of a method for controlling a display interface according to an exemplary embodiment. As shown in Fig. 4, the method may be implemented by a mobile terminal, including the following steps.

In step 401, it is monitored whether an application service of a voice call type is in a voice activated state.

When the current state is the voice call state, the process proceeds to step 402. When it is not in the voice call state, the process ends and the anti-unintended-touch interface does not need to be displayed.

In step 402, it is monitored through an audio management service whether there is an update event at the audio port.

When there is an update event at the audio port, the process proceeds to step 403. When there is no update event at the audio port, step 402 is repeated until the end of the voice call. Then the process ends, and the anti-unintended-touch interface does not need to be displayed.

In step 403, a primary output device is identified.

In step 404, a list of audio output ports is obtained based on the identifier of the primary output device.

In step 405, it is monitored whether the earpiece device is enabled based on the device type in the list of audio output ports.

When the earpiece device is enabled, the process proceeds to step 406. When the earpiece device is not enabled, the process ends, and the anti-unintended-touch interface does not need to be displayed.

In step 406, an anti-unintended-touch interface is displayed.

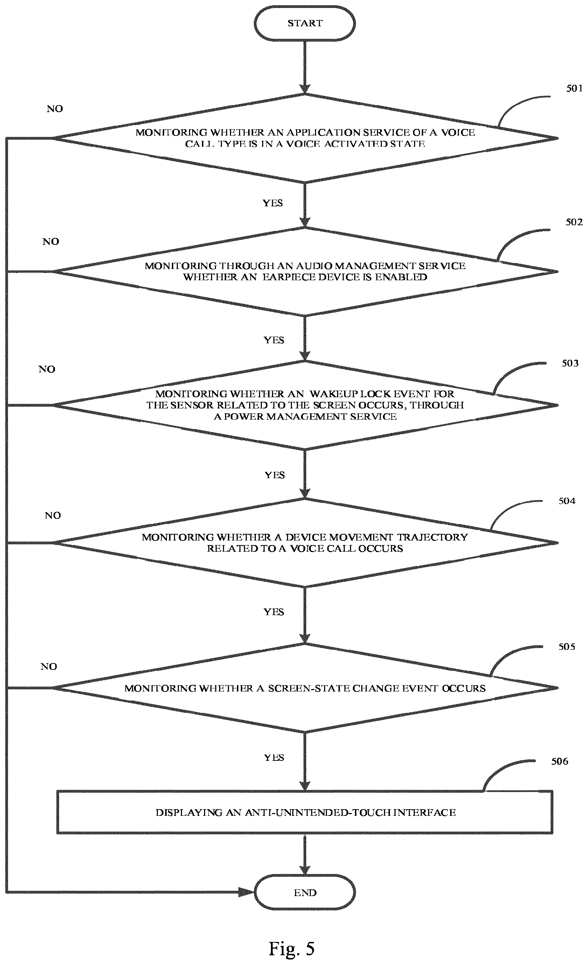

Fig. 5 is a flowchart of a method for controlling a display interface according to an exemplary embodiment. As shown in Fig. 5, the method may be implemented by a mobile terminal, including the following steps.

In step 501, it is monitored whether an application service of a voice call type is in a voice activated state.

When the current state is the voice call state, the process proceeds to step 502. When it is not in the voice call state, the process ends, and the anti-unintended-touch interface does not need to be displayed.

In step 502, it is monitored through the audio management service whether the earpiece device is enabled.

When the earpiece device is enabled, the process proceeds to step 503. When there is no earpiece device enabled, step 502 is repeated until the end of the voice call. Then the process ends, and the anti-unintended-touch interface does not need to be displayed.

In step 503, it is monitored through the power management service whether a wakeup lock event for the sensor related to the screen occurs.

When a wakeup lock event for the sensor related to the screen occurs, the process proceeds to step 504. When no wakeup lock event for the sensor related to the screen occurs, step 503 is repeated until the end of the voice call. Then the process ends, and the anti-unintended-touch interface does not need to be displayed.

In step 504, it is monitored whether a device movement trajectory related to the voice call occurs through a user behavior service or an input management service.

When a device movement trajectory related to the voice call occurs, the process proceeds to step 505. When no device movement trajectory related to the voice call occurs, step 504 is repeated until the end of the voice call. Then the process ends, and the anti-unintended-touch interface does not need to be displayed.

In step 505, it is monitored whether a screen-state change event occurs.

When a screen-state change event occurs, the process proceeds to step 506. When no screen-state change event occurs, step 505 is repeated until the end of the voice call. Then the process ends, and the anti-unintended-touch interface does not need to be displayed.

In step 506, an anti-unintended-touch interface is displayed.

The above steps 502-504 are four conditions that need to be met. There is no strict performing order among them, and the order of steps may be interchanged. However, the anti-unintended-touch interface may be displayed when one or more of the four conditions are met, not necessarily requiring all of the four conditions are met, depending on actual application.

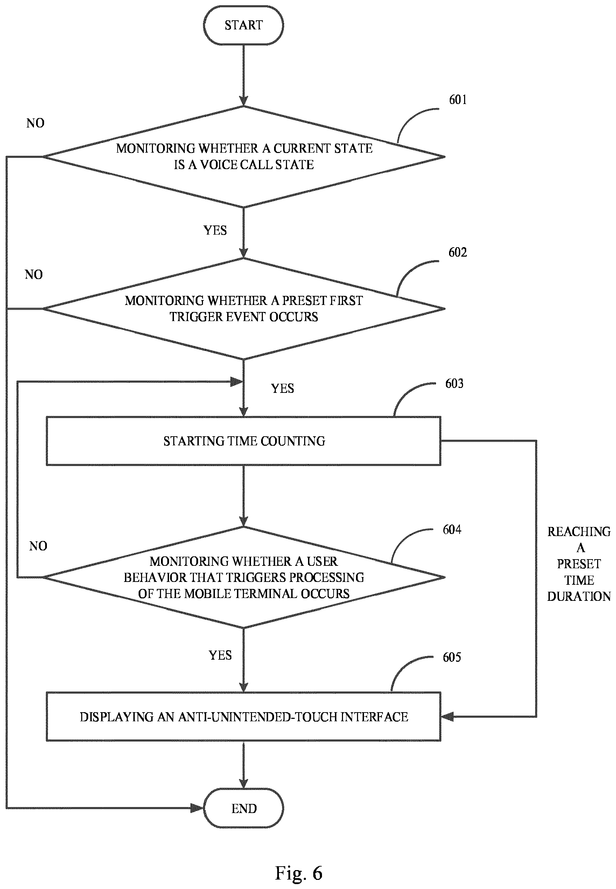

Fig. 6 is a flowchart of a method for controlling a display interface according to an exemplary embodiment. As shown in Fig. 6, the method may be implemented by a mobile terminal, including the following steps:

In step 601, it is monitored whether a current state is a voice call state. When the current state is the voice call state, the process proceeds to step 602. When the current state is not the voice call state, the process ends, or step 601 may be repeated.

In step 602, it is monitored whether a preset first trigger event occurs. When the preset first trigger event occurs, the process proceeds to step 603. When no preset first trigger event occurs, step 602 is repeated until the end of the voice call. Then the process ends, and the anti-unintended-touch interface does not need to be displayed.

In step 603, time counting is performed. When the time counting reaches a preset time duration, the process proceeds to step 605. When the time counting has not reached the preset time duration, the process proceeds to step 604.

In step 604, it is monitored whether a user behavior that triggers processing of the mobile terminal occurs. When the user behavior that triggers processing of the mobile terminal occurs, the process proceeds to step 605; when no user behavior that triggers processing of the mobile terminal occurs, step 603 is repeated to continue time counting until the time counting reaches the preset time duration.

In step 605, an anti-unintended-touch interface is displayed.

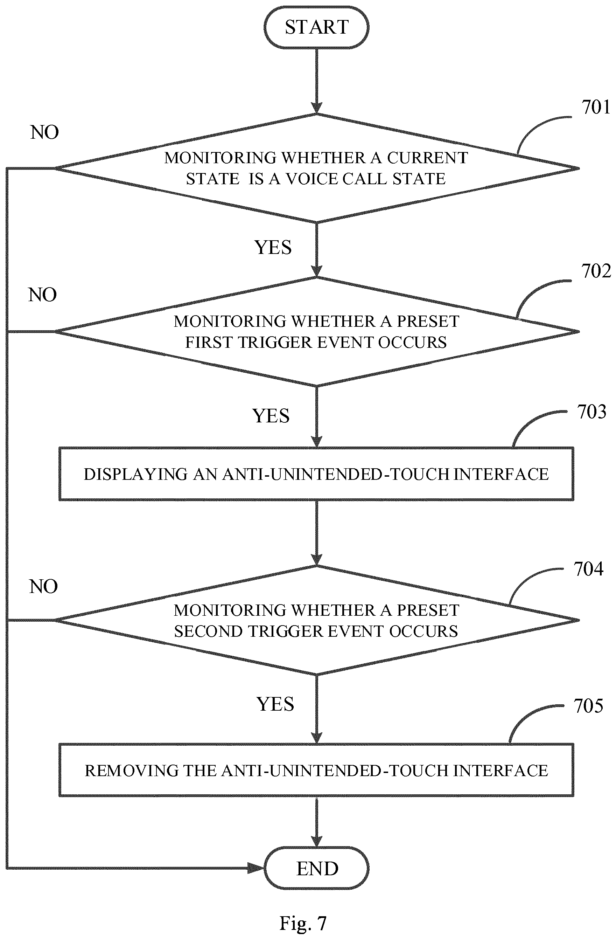

Fig. 7 is a flowchart of a method for controlling a display interface according to an exemplary embodiment. As shown in Fig. 7, the method may be implemented by a mobile terminal, including the following steps:

In step 701, it is monitored whether a current state is a voice call state. When the current state is the voice call state, the process proceeds to step 702. When the current state is not the voice call state, the process ends, or step 701 may be repeated.

In step 702, it is monitored whether a preset first trigger event occurs. When the preset first trigger event occurs, the process proceeds to step 703. When no preset first trigger event occurs, step 702 is repeated until the end of the voice call. Then the process ends, and the anti-unintended-touch interface does not need to be displayed.

In step 703, an anti-unintended-touch interface is displayed.

In step 704, it is monitored whether a preset second trigger event occurs. When the preset second trigger event occurs, the process proceeds to step 705; when no preset second trigger event occurs, the process ends, or step 704 is repeated until the voice call ends, and the voice call state is exited. When the voice call state is exited, the process may also proceed to step 705.

In step 705, the anti-unintended-touch interface is removed.

After the anti-unintended-touch interface is removed, the time counting may be started; when the time counting reaches a preset second monitoring duration, the anti-unintended-touch interface is displayed again.

Through the above introduction, the implementation process for controlling a display interface may be understood. The process is implemented by the mobile terminal. The internal structure and function of the device will be described below.

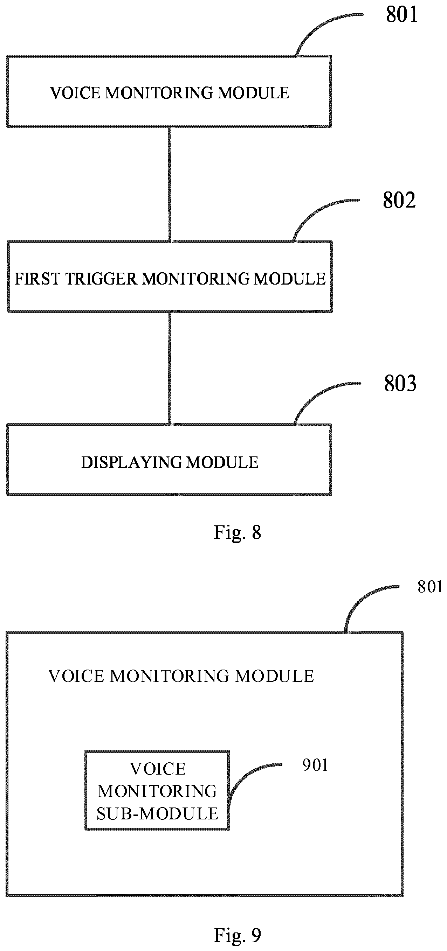

Fig. 8 is a block diagram showing a device for controlling a display interface according to an exemplary embodiment. Referring to Fig. 8, the device includes a voice monitoring module 801, a first trigger monitoring module 802 and a displaying module 803.

The voice monitoring module 801 is configured to monitor whether a current state is a voice call state.

The first trigger monitoring module 802 is configured to, when the current state is the voice call state, monitor whether a preset first trigger event occurs.

The displaying module 803 is configured to, when the preset first trigger event occurs, display an anti-unintended-touch interface.

In one embodiment, as shown in Fig. 9, the voice monitoring module 801 includes: a voice monitoring sub-module 901.

The voice monitoring sub-module 901 is configured to monitor whether an application service of a voice call type is in a voice activated state.

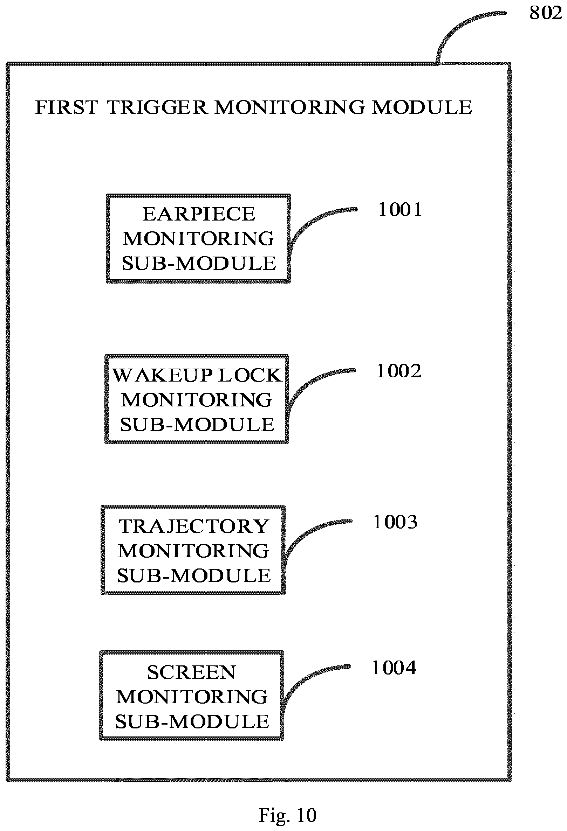

In one embodiment, as shown in Fig. 10, the first trigger monitoring module 802 includes at least one of: an earpiece monitoring sub-module 1001, a wakeup lock monitoring sub-module 1002, a trajectory monitoring sub-module 1003 and a screen monitoring sub-module 1004.

The earpiece monitoring sub-module 1001 is configured to monitor whether an earpiece device is enabled.

The wakeup lock monitoring sub-module 1002 is configured to monitor whether a wakeup lock event for a sensor related to a screen occurs.

The trajectory monitoring sub-module 1003 is configured to monitor whether a device movement trajectory related to a voice call occurs.

The screen monitoring sub-module 1004 is configured to monitor whether a screen-state change event occurs.

In one embodiment, the earpiece monitoring sub-module 1001 is configured to monitor through an audio management service whether the earpiece device is enabled.

In one embodiment, the earpiece monitoring sub-module 1001 is configured to monitor through the audio management service whether an update event at an audio port occurs; when an update event at the audio port is monitored, identify a primary output device; obtain a list of audio output ports based on an identifier of the primary output device; and monitor whether the earpiece device is enabled, based on a device type in the list of audio output ports.

In one embodiment, the wakeup lock monitoring sub-module 1002 is configured to monitor whether the wakeup lock event for the sensor related to the screen occurs, through a power management service.

In one embodiment, the wakeup lock monitoring sub-module 1002 is configured to monitor, in an interface monitoring mode, whether the wakeup lock event for the sensor related to the screen occurs, through a power management service .

In one embodiment, the wakeup lock event includes requesting a wakeup lock event or releasing a wakeup lock event.

In one embodiment, the trajectory monitoring sub-module 1003 is configured to monitor whether a device movement trajectory related to a voice call occurs, through a user behavior service or an input management service.

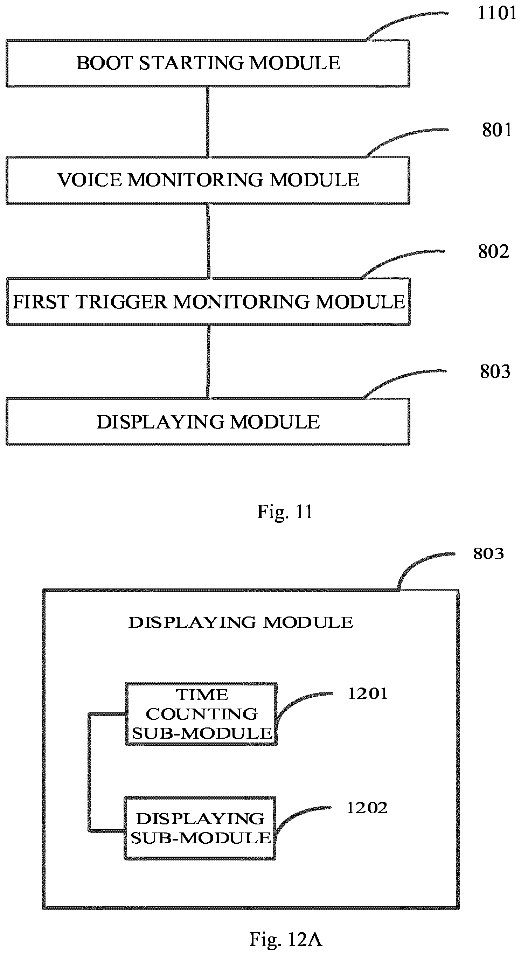

In one embodiment, as shown in Fig. 11, the device further includes: a boot starting module 1101.

The boot starting module 1101 is configured to, at boot time, start the audio management service, the power management service, the user behavior service or the input management service.

In one embodiment, as shown in Fig. 12A, the displaying module 803 includes: a time counting sub-module 1201 and a displaying sub-module 1202.

The time counting sub-module 1201 is configured to, when the preset first trigger event occurs, start time counting.

The displaying sub-module 1202 is configured to, when the time counting reaches a preset time duration, display the anti-unintended-touch interface.

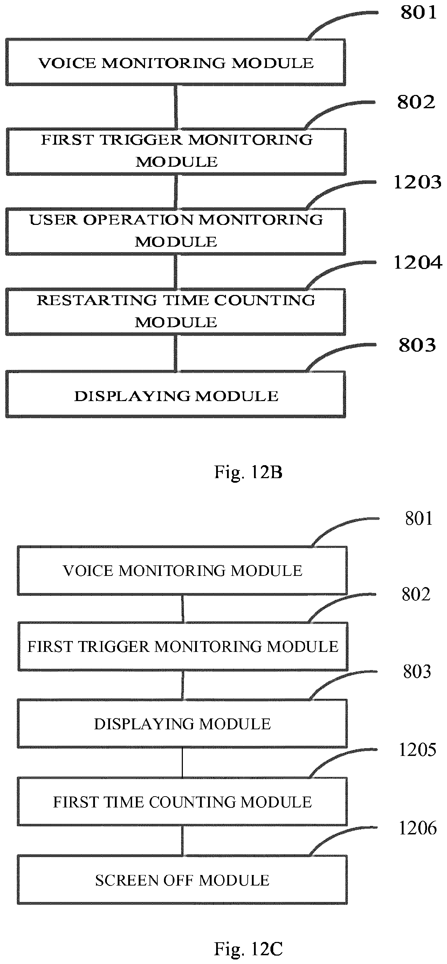

In one embodiment, as shown in Fig. 12C, the device further includes: a first time counting module 1205 and a screen off module 1206.

The first time counting module 1205 is configured to start time counting upon the anti-unintended-touch interface is displayed.

The screen off module 1206 is configured to enter a screen off state when the time counting reaches a first monitoring duration.

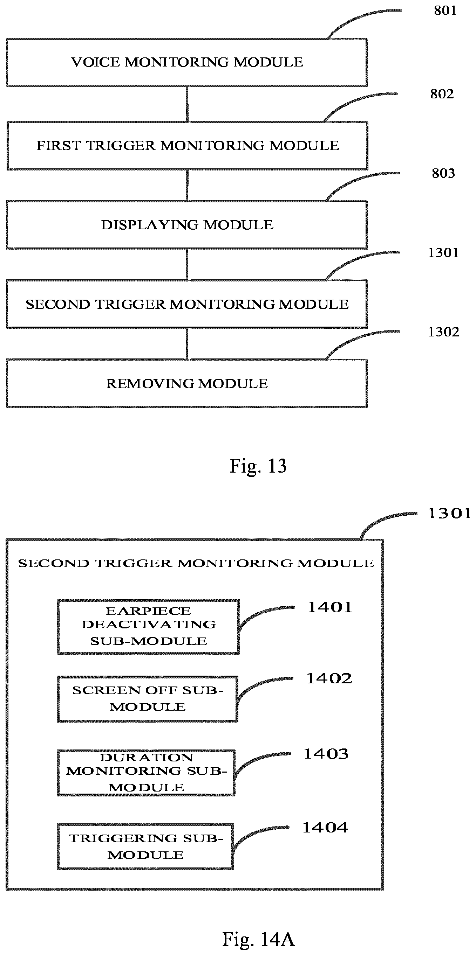

In one embodiment, as shown in Fig. 13, the device further includes: a second trigger monitoring module 1301 and a removing module 1302.

The second trigger monitoring module 1301 is configured to monitor whether a preset second trigger event occurs.

The removing module 1302 is configured to remove the anti-unintended-touch interface when the preset second trigger event occurs.

In one embodiment, as shown in Fig. 14A, the second trigger monitoring module 1301 includes at least one of: an earpiece deactivating sub-module 1401, a screen off sub-module 1402, a duration monitoring sub-module 1403 and a triggering sub-module 1404.

The earpiece deactivating sub-module 1401 is configured to monitor whether the earpiece device is deactivated.

The screen off sub-module 1402 is configured to monitor whether a screen off state event occurs.

The duration monitoring sub-module 1403 is configured to monitor whether the anti-unintended-touch interface has been displayed for a preset anti-unintended-touch duration.

The triggering sub-module 1404 is configured to monitor whether a trigger event for the anti-unintended-touch interface occurs.

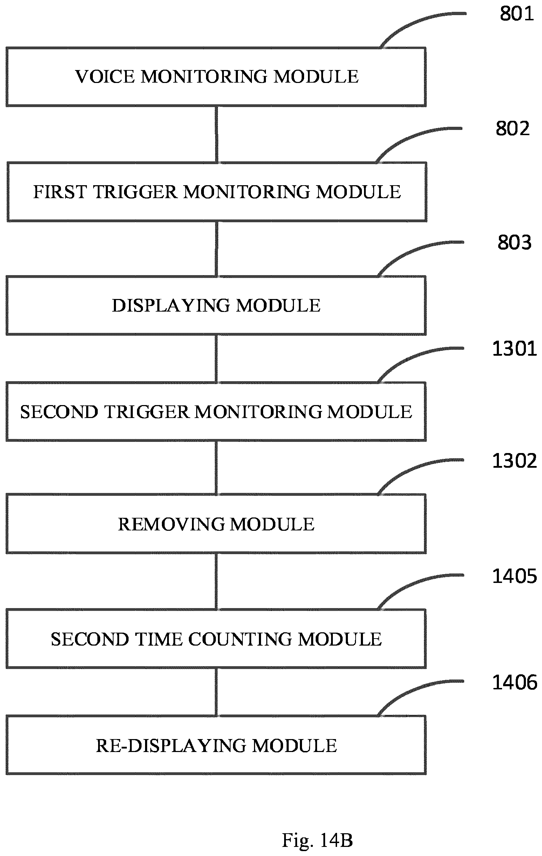

In one embodiment, as shown in Fig. 14B, the device further includes: a second time counting module 1405 and a re-displaying module 1406.

The second time counting module 1405 is configured to start time counting upon the anti-unintended-touch interface is removed.

The re-displaying module 1406 is configured to, when the time counting reaches a second monitoring duration, display the anti-unintended-touch interface again.

In one embodiment, as shown in Fig. 12B, the device further includes: a user operation monitoring module 1203 and a restarting time counting module 1204.

The user operation monitoring module 1203 is configured to, when the time counting does not reach the preset time duration or does not reach the second monitoring duration, monitor whether a user operation occurs.

The restarting time counting module 1204 is configured to, when the user operation occurs, restart time counting.

In one embodiment, the anti-unintended-touch interface includes: a sliding-unlocking anti-unintended-touch interface, or a touch-unlocking anti-unintended-touch interface.

For the device in the above embodiment, the specific manners in which various modules thereof operate have been described in detail in the embodiment relating to the above method, and therefore will not be repeated herein.

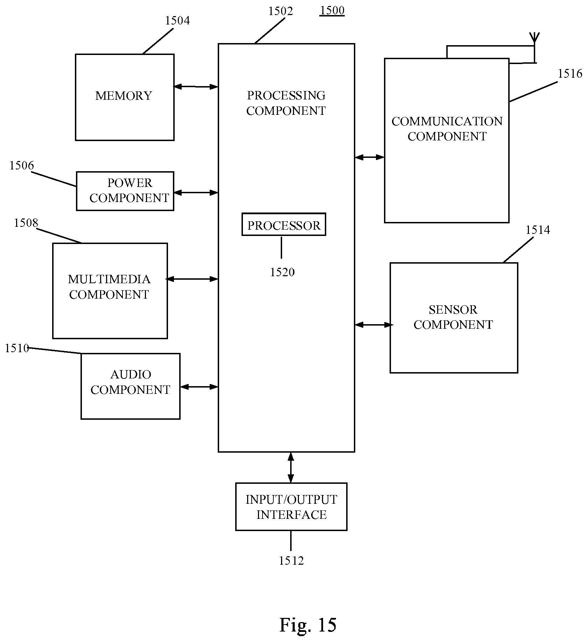

Fig. 15 is a block diagram showing a device 1500 for controlling a display interface according to an exemplary embodiment. For example, the device 1500 may be a mobile phone, a computer, a digital broadcast terminal, a messaging device, a gaming console, a tablet, a medical device, exercise equipment, a personal digital assistant, and the like.

Referring to Fig. 15, the device 1500 may include one or more of the following components: a processing component 1502, a memory 1504, a power component 1506, a multimedia component 1508, an audio component 1510, an input/output (I/O) interface 1512, a sensor component 1514, and a communication component 1516.

The processing component 1502 typically controls overall operations of the device 1500, such as the operations associated with display, telephone calls, data communications, camera operations, and recording operations. The processing component 1502 may include one or more processors 1520 to execute instructions to perform all or part of the steps in the above described methods. Moreover, the processing component 1502 may include one or more modules which facilitate the interaction between the processing component 1502 and other components. For instance, the processing component 1502 may include a multimedia module to facilitate the interaction between the multimedia component 1508 and the processing component 1502.

The memory 1504 is configured to store various types of data to support the operation of the device 1500. Examples of such data include instructions for any applications or methods operated on the device 1500, contact data, phonebook data, messages, pictures, video, etc. The memory 1504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1506 provides power to various components of the device 1500. The power component 1506 may include a power management system, one or more power sources, and any other components associated with the generation, management, and distribution of power in the device 1500.

The multimedia component 1508 includes a screen providing an output interface between the device 1500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1508 includes a front camera and/or a rear camera. The front camera and/or the rear camera may receive an external multimedia datum while the device 1500 is in an operation mode, such as a photographing mode or a video mode. Each of the front camera and the rear camera may be a fixed optical lens system or have focus and optical zoom capability.

The audio component 1510 is configured to output and/or input audio signals. For example, the audio component 1510 includes a microphone ("MIC") configured to receive an external audio signal when the device 1500 is in an operation mode, such as a call mode, a recording mode, and a voice recognition mode. The received audio signal may be further stored in the memory 1504 or transmitted via the communication component 1516. In some embodiments, the audio component 1510 further includes a speaker to output audio signals.

The I/O interface 1512 provides an interface between the processing component 1502 and peripheral interface modules, such as a keyboard, a click wheel, buttons, and the like. The buttons may include, but are not limited to, a home button, a volume button, a starting button, and a locking button.

The sensor component 1514 includes one or more sensors to provide status assessments of various aspects of the device 1500. For instance, the sensor component 1514 may detect an open/closed status of the device 1500, relative positioning of components, e.g., the display and the keypad, of the device 1500, a change in position of the device 1500 or a component of the device 1500, a presence or absence of user contact with the device 1500, an orientation or an acceleration/deceleration of the device 1500, and a change in temperature of the device 1500. The sensor component 1514 may include a proximity sensor configured to detect the presence of nearby objects without any physical contact. The sensor component 1514 may also include a light sensor, such as a CMOS or CCD image sensor, for use in imaging applications. In some embodiments, the sensor component 1514 may also include an accelerometer sensor, a gyroscope sensor, a magnetic sensor, a pressure sensor, or a temperature sensor.

The communication component 1516 is configured to facilitate communication, wired or wirelessly, between the device 1500 and other devices. The device 1500 can access a wireless network based on a communication standard, such as WiFi, 2G, or 3G, or a combination thereof. In one exemplary embodiment, the communication component 1516 receives a broadcast signal or broadcast associated information from an external broadcast management system via a broadcast channel. In one exemplary embodiment, the communication component 1516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described method.

In exemplary embodiments, there is also provided a non-transitory computer-readable storage medium including instructions, such as included in the memory 1504, executable by the processor 1520 in the device 1500, for performing the above described method. For example, the non-transitory computer-readable storage medium may be a ROM, a RAM, a CD-ROM, a magnetic tape, a floppy disc, an optical data storage device, and the like.

A device for controlling a display interface, including:
a processor; and
a memory for storing instructions executable by the processor,
wherein the processor is configured to:
monitor whether a current state is a voice call state;
when the current state is the voice call state, monitor whether a preset first trigger event occurs; and
when the preset first trigger event occurs, display an anti-unintended-touch interface.

The processor is further configured such that:
monitoring whether a current state is a voice call state includes:
monitoring whether an application service of a voice call type is in a voice activated state.

The processor is further configured such that:
monitoring whether a preset first trigger event occurs includes at least one of:
monitoring whether an earpiece device is enabled;
monitoring whether a wakeup lock event for a sensor related to a screen occurs;
monitoring whether a device movement trajectory related to a voice call occurs; and
monitoring whether a screen-state change event occurs.

The processor is further configured such that:
monitoring whether an earpiece device is enabled includes:
monitoring through an audio management service whether the earpiece device is enabled.

The processor is further configured such that:
monitoring through an audio management service whether the earpiece device is enabled includes:
monitoring through the audio management service whether an update event at an audio port occurs;
when an update event at the audio port is monitored, identifying a primary output device;
obtaining a list of audio output ports, based on an identifier of the primary output device; and
monitoring whether the earpiece device is enabled, based on a device type in the list of audio output ports.

The processor is further configured such that:
monitoring whether a wakeup lock event for a sensor related to a screen occurs includes:
monitoring whether the wakeup lock event for the sensor related to the screen occurs, through a power management service.

The processor is further configured such that:
the wakeup lock event includes requesting a wakeup lock event or releasing a wakeup lock event.

The processor is further configured such that:
monitoring whether a device movement trajectory related to a voice call occurs includes:
monitoring whether a device movement trajectory related to a voice call occurs, through a user behavior service or an input management service.

The processor is further configured such that:
the method for further includes:
at boot time, starting the audio management service, the power management service, the user behavior service or the input management service.

The processor is further configured such that:
when the preset first trigger event occurs, displaying an anti-unintended-touch interface includes:
starting time counting when the preset first trigger event occurs; and
when the time counting reaches a preset time duration, displaying the anti-unintended-touch interface.

The processor is further configured such that:
monitoring whether a preset second trigger event occurs; and
removing the anti-unintended-touch interface when the preset second trigger event occurs.

The processor is further configured such that:
monitoring whether a preset second trigger event occurs includes at least one of:
monitoring whether the earpiece device is deactivated;
monitoring whether a screen off state event occurs;
monitoring whether the anti-unintended-touch interface has been displayed for a preset anti-unintended-touch duration; and
monitoring whether a trigger event for the anti-unintended-touch interface occurs.

The processor is further configured such that:
the anti-unintended-touch interface includes: a sliding-unlocking anti-unintended-touch interface, or a touch-unlocking anti-unintended-touch interface.

A non-transitory computer readable storage medium, when instructions in the storage medium are executed by a processor of a mobile terminal, to enable the mobile terminal to perform a method for controlling a display interface. The method includes:
monitoring whether a current state is a voice call state;
when the current state is the voice call state, monitoring whether a preset first trigger event occurs; and
when the preset first trigger event occurs, displaying an anti-unintended-touch interface.

The instructions in the storage medium may also include:
monitoring whether a current state is a voice call state includes:
monitoring whether an application service of a voice call type is in a voice activated state.

The instructions in the storage medium may also include:
monitoring whether a preset first trigger event occurs includes at least one of:
monitoring whether an earpiece device is enabled;
monitoring whether a wakeup lock event for a sensor related to a screen occurs;
monitoring whether a device movement trajectory related to a voice call occurs; and
monitoring whether a screen-state change event occurs.

The instructions in the storage medium may also include:
monitoring whether an earpiece device is enabled includes:
monitoring through an audio management service whether the earpiece device is enabled.

The instructions in the storage medium may also include:
monitoring through an audio management service whether the earpiece device is enabled includes:
monitoring through the audio management service whether an update event at an audio port occurs;
when an update event at the audio port is monitored, identifying a primary output device;
obtaining a list of audio output ports, based on an identifier of the primary output device; and
monitoring whether the earpiece device is enabled, based on a device type in the list of audio output ports.

The instructions in the storage medium may also include:
monitoring whether a wakeup lock event for a sensor related to a screen occurs includes:
monitoring whether the wakeup lock event for the sensor related to the screen occurs, through a power management service.

The instructions in the storage medium may also include:
the wakeup lock event includes requesting a wakeup lock event or releasing a wakeup lock event.

The instructions in the storage medium may also include:
monitoring whether a device movement trajectory related to a voice call occurs includes:
monitoring whether a device movement trajectory related to a voice call occurs, through a user behavior service or an input management service.

The instructions in the storage medium may also include:
the method for further includes:
at boot time, starting the audio management service, the power management service, the user behavior service or the input management service.

The instructions in the storage medium may also include:
when the preset first trigger event occurs, displaying an anti-unintended-touch interface includes:
starting time counting when the preset first trigger event occurs; and
when the time counting reaches a preset time duration, displaying the anti-unintended-touch interface.

The instructions in the storage medium may also include:
monitoring whether a preset second trigger event occurs; and
removing the anti-unintended-touch interface when the preset second trigger event occurs.

The instructions in the storage medium may also include:
monitoring whether a preset second trigger event occurs includes at least one of:
monitoring whether the earpiece device is deactivated;
monitoring whether a screen off state event occurs;
monitoring whether the anti-unintended-touch interface has been displayed for a preset anti-unintended-touch duration; and
monitoring whether a trigger event for the anti-unintended-touch interface occurs.

The instructions in the storage medium may also include:
the anti-unintended-touch interface includes: a sliding-unlocking anti-unintended-touch interface, or a touch-unlocking anti-unintended-touch interface.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art. It is intended that the specification and examples be considered as exemplary only, with a true scope and spirit of the disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the disclosure only be limited by the appended claims.

## Claims

1. A method for controlling a display interface, comprising:
monitoring whether a current state is a voice call state;
when the current state is the voice call state, monitoring whether a preset first trigger event occurs; and
when the preset first trigger event occurs, displaying an anti-unintended-touch interface.

2. The method for controlling a display interface according to claim 1, wherein monitoring whether a current state is a voice call state comprises:
monitoring whether an application service of a voice call type is in a voice activated state.

3. The method for controlling a display interface according to claim 1, wherein monitoring whether a preset first trigger event occurs comprises at least one of:
monitoring whether an earpiece device is enabled;
monitoring whether a wakeup lock event for a sensor related to a screen occurs;
monitoring whether a device movement trajectory related to a voice call occurs; and
monitoring whether a screen-state change event occurs.

4. The method for controlling a display interface according to claim 3, wherein monitoring whether an earpiece device is enabled comprises:
monitoring through an audio management service whether the earpiece device is enabled.

5. The method for controlling a display interface according to claim 4, wherein monitoring through an audio management service whether the earpiece device is enabled comprises:
monitoring through the audio management service whether an update event at an audio port occurs;
when an update event at the audio port is monitored, identifying a primary output device;
obtaining a list of audio output ports, based on an identifier of the primary output device; and
monitoring whether the earpiece device is enabled, based on a device type in the list of audio output ports.

6. The method for controlling a display interface according to claim 3, wherein monitoring whether a wakeup lock event for a sensor related to a screen occurs comprises:
monitoring whether the wakeup lock event for the sensor related to the screen occurs, through a power management service.

7. The method for controlling a display interface according to claim 6, wherein monitoring whether the wakeup lock event for the sensor related to the screen occurs, through a power management service comprises:
monitoring, in an interface monitoring mode, whether the wakeup lock event for the sensor related to the screen occurs, through a power management service.

8. The method for controlling a display interface according to claim 3, wherein the wakeup lock event comprises requesting a wakeup lock event or releasing a wakeup lock event.

9. The method for controlling a display interface according to claim 3, wherein monitoring whether a device movement trajectory related to a voice call occurs comprises:
monitoring whether a device movement trajectory related to a voice call occurs, through a user behavior service or an input management service.

10. The method for controlling a display interface according to any one of claims 4, 5 and 9, further comprising:
at boot time, starting the audio management service, the power management service, the user behavior service or the input management service.

11. The method for controlling a display interface according to claim 1, wherein when the preset first trigger event occurs, displaying an anti-unintended-touch interface comprises:
when the preset first trigger event occurs, starting time counting; and
when the time counting reaches a preset time duration, displaying the anti-unintended-touch interface.

12. The method for controlling a display interface according to claim 1, further comprising:
upon the anti-unintended-touch interface is displayed, starting time counting; and
when the time counting reaches a first monitoring duration, entering a screen off state.

13. The method for controlling a display interface according to claim 1, further comprising:
monitoring whether a preset second trigger event occurs; and
when the preset second trigger event occurs, removing the anti-unintended-touch interface.

14. The method for controlling a display interface according to claim 13, wherein monitoring whether a preset second trigger event occurs comprises at least one of:
monitoring whether the earpiece device is deactivated;
monitoring whether a screen off state event occurs;
monitoring whether the anti-unintended-touch interface has been displayed for a preset anti-unintended-touch duration; and
monitoring whether a trigger event for the anti-unintended-touch interface occurs.

15. The method for controlling a display interface according to claim 13, further comprising:
upon the anti-unintended-touch interface is removed, starting time counting; and
when the time counting reaches a second monitoring duration, displaying the anti-unintended-touch interface again.

16. The method for controlling a display interface according to claim 11 or 15, further comprising:
when the time counting does not reach the preset time duration or does not reach the second monitoring duration, monitoring whether a user operation occurs; and
when the user operation occurs, restarting time counting.

17. The method for controlling a display interface according to claim 1, wherein the anti-unintended-touch interface comprises: a sliding-unlocking anti-unintended-touch interface, or a touch-unlocking anti-unintended-touch interface.

18. A device for controlling a display interface, comprising:
a voice monitoring module configured to monitor whether a current state is a voice call state;
a first trigger monitoring module configured to, when the current state is the voice call state, monitor whether a preset first trigger event occurs; and
a displaying module configured to, when the preset first trigger event occurs, display an anti-unintended-touch interface.

19. The device for controlling a display interface according to claim 18, wherein the voice monitoring module comprises:
a voice monitoring sub-module configured to monitor whether an application service of a voice call type is in a voice activated state.

20. The device for controlling a display interface according to claim 18, wherein the first trigger monitoring module comprises at least one of:
an earpiece monitoring sub-module configured to monitor whether an earpiece device is enabled;
a wakeup lock monitoring sub-module configured to monitor whether a wakeup lock event for a sensor related to a screen occurs;
a trajectory monitoring sub-module configured to monitor whether a device movement trajectory related to a voice call occurs; and
a screen monitoring sub-module configured to monitor whether a screen-state change event occurs.

21. The device for controlling a display interface according to claim 20, wherein the earpiece monitoring sub-module is configured to monitor through an audio management service whether the earpiece device is enabled.

22. The device for controlling a display interface according to claim 21, wherein the earpiece monitoring sub-module is configured to monitor through the audio management service whether an update event at an audio port occurs; when an update event at the audio port is monitored, identify a primary output device; obtain a list of audio output ports, based on an identifier of the primary output device; and monitor whether the earpiece device is enabled, based on a device type in the list of audio output ports.

23. The device for controlling a display interface according to claim 20, wherein the wakeup lock monitoring sub-module is configured to monitor whether the wakeup lock event for the sensor related to the screen occurs, through a power management service.

24. The device for controlling a display interface according to claim 23, wherein the wakeup lock monitoring sub-module is configured to monitor, in an interface monitoring mode, whether the wakeup lock event for the sensor related to the screen occurs, through a power management service.

25. The device for controlling a display interface according to claim 20, wherein the wakeup lock event comprises requesting a wakeup lock event or releasing a wakeup lock event.

26. The device for controlling a display interface according to claim 20, wherein the trajectory monitoring sub-module is configured to monitor whether a device movement trajectory related to a voice call occurs, through a user behavior service or an input management service.

27. The device for controlling a display interface according to any one of claims 21, 22 and 26, further comprising:
a boot starting module configured to, at boot time, start the audio management service, the power management service, the user behavior service or the input management service.

28. The device for controlling a display interface according to claim 18, wherein the displaying module comprises:
a time counting sub-module configured to, when the preset first trigger event occurs, start time counting; and
a displaying sub-module configured to, when the time counting reaches a preset time duration, display the anti-unintended-touch interface.

29. The device for controlling a display interface according to claim 18, further comprising:
a first time counting module configured to, upon the anti-unintended-touch interface is displayed, start time counting; and
a screen off module configured to, when the time counting reaches a first monitoring duration, enter a screen off state.

30. The device for controlling a display interface according to claim 18, further comprising:
a second trigger monitoring module configured to monitor whether a preset second trigger event occurs; and
a removing module configured to, when the preset second trigger event occurs, remove the anti-unintended-touch interface.

31. The device for controlling a display interface according to claim 30, wherein the second trigger monitoring module comprises at least one of:
an earpiece deactivating sub-module configured to monitor whether the earpiece device is deactivated;
a screen off sub-module configured to monitor whether a screen off state event occurs;
a duration monitoring sub-module configured to monitor whether the anti-unintended-touch interface has been displayed for a preset anti-unintended-touch duration; and
a triggering sub-module configured to monitor whether a trigger event for the anti-unintended-touch interface occurs.

32. The device for controlling a display interface according to claim 30, further comprising:
a second time counting module configured to, upon the anti-unintended-touch interface is removed, start time counting; and
a re-displaying module configured to, when the time counting reaches a second monitoring duration, display the anti-unintended-touch interface again.

33. The device for controlling a display interface according to claim 28 or 32, further comprising:
a user operation monitoring module configured to, when the time counting does not reach the preset time duration or does not reach the second monitoring duration, monitor whether a user operation occurs; and
a restarting time counting module configured to, when the user operation occurs, restart time counting.

34. The device for controlling a display interface according to claim 18, wherein the anti-unintended-touch interface comprises: a sliding-unlocking anti-unintended-touch interface, or a touch-unlocking anti-unintended-touch interface.

35. A device for controlling a display interface, comprising:
a processor; and
a memory for storing instructions executable by the processor,
wherein the processor is configured to:
monitor whether a current state is a voice call state;
when the current state is the voice call state, monitor whether a preset first trigger event occurs; and
when the preset first trigger event occurs, display an anti-unintended-touch interface.
